Europäisches Patentamt

European Patent Office

Office européen des brevets

(11) Publication number: **0 039 749**
**B1**

## EUROPEAN PATENT SPECIFICATION

(45) Date of publication of patent specification: **21.11.85**

(51) Int. Cl.⁴: **C 08 F 8/12,** C 03 C 27/12, C 09 D 5/00

(21) Application number: **80303135.0**

(22) Date of filing: **05.09.80**

(54) Process for production of hydration product of ethylene-glycidyl acrylate compound copolymer and use of the product as an interlayer for laminated glass, and in compositions for powder coating.

(30) Priority: **22.04.80 JP 53969/80**

(43) Date of publication of application:
**18.11.81 Bulletin 81/46**

(45) Publication of the grant of the patent:
**21.11.85 Bulletin 85/47**

(84) Designated Contracting States:
**DE FR GB IT NL**

(56) References cited:
**FR-A-2 204 668**

(73) Proprietor: **SUMITOMO CHEMICAL COMPANY, LIMITED**
**15 Kitahama 5-chome Higashi-ku**
**Osaka-shi Osaka 541 (JP)**

(72) Inventor: **Ohmae, Tadayuki**
**No. 6-6, Hoshigoe-cho**
**Niihama-shi Ehime-ken (JP)**
Inventor: **Murakami, Teruhiko**
**No. 7-21, Hoshigoe-cho**
**Niihama-shi Ehime-ken (JP)**
Inventor: **Kanno, Yoshinori**
**No- 9-4, Kochi-cho**
**Niihama-shi Ehime-ken (JP)**

(74) Representative: **Allard, Susan Joyce et al**
**BOULT, WADE & TENNANT 27 Furnival street**
**London EC4A 1PQ (GB)**

The file contains technical information submitted after the application was filed and not included in this specification

Courier Press, Leamington Spa, England.

## Description

The present invention relates to a process for the production of a powdery hydration reaction product of an ethylene-glycidyl acrylate or methacrylate copolymer and to various uses of the product, in particular to a laminated safety glass wherein the hydration product is used as an interlayer, and to a powder coating composition containing the powdery hydration reaction product.

It is known as disclosed in Japanese Patent Publication (unexamined) No. 88075/1978 that when an ethylene-glycidyl acrylate compound copolymer is subjected to partial ring-opening of the epoxy groups to convert them into hydroxy groups, the adhesion thereof to various materials, particularly to metal, is significantly improved.

The hydration reaction of the epoxy groups of an ethylene-glycidyl acrylate compound copolymer is generally carried out either in a uniform system wherein the copolymer is uniformly dissolved in a good solvent, such as aromatic hydrocarbons, or in a non-uniform system wherein the copolymer is suspended in a poor solvent, such as lower alcohols. According to the former method in a uniform system, after the hydration reaction, the hydration reaction product must be precipitated by adding to the reaction mixture a large amount of poor solvent such as lower fatty alcohols, and hence, this method requires a large amount of solvent and further complicated steps, which is disadvantageous from the industrial viewpoint. Moreover, when the uniform system is used, the reaction rate is low because of the low solubility of water in the solvent. When the non-uniform system is used the copolymer reacts in bulk form which also results in low hydration reaction rate. Moreover, the hydration reaction product produced by the latter method in non-uniform system needs to be pulverised by freeze pulverization or solvent pulverization, which is disadvantageous from the industrial viewpoint.

As a result of the present inventors' intensive study on an improvement of the hydration reaction of ethylene-glycidyl acrylate or methacrylate copolymer, it has been found that when the hydration reaction of the copolymer is carried out under specific conditions using a specific solvent system, the reaction product is pulverized simultaneously as the hydration reaction proceeds and furthermore that the hydration reaction rate of the epoxy groups can be controlled in a wide range.

Accordingly, the present invention provides a process for the production of a powdery hydration product of an ethylene-glycidyl acrylate or methacrylate copolymer (Melt Index; 10—5,000), which comprises subjecting the copolymer to hydration so as to hydrolyse from 5 to 80 mole % of the epoxy group under agitation at a temperature higher than the melting point of the copolymer for more than one hour in the presence or absence of a catalyst, the hydrolysis being carried out in a three-component solvent system consisting of (1) a good solvent which is effective to solve the copolymer under the reaction conditions and is an aromatic hydrocarbon, a naphthalene hydride, a halogenated hydrocarbon, or a phthalic acid ester or a mixture of two or more thereof, (2) a poor solvent which itself is soluble in the above-mentioned good solvent and in water, but is not effective to solve the copolymer under the reaction conditions and is a lower aliphatic or fatty alcohol, an ethyleneglycol monoalkylether, acetone or a mixture of two or more thereof and (3) water, where the proportions of the solvent in the three component solvent system are as follows:

good solvent/poor solvent = 1:5 to 5:1 (weight ratio)

poor solvent/water = 1:10 to 10:1 (weight ratio)

total three-component solvent/starting copolymer = 2:1 to 20:1 (weight ratio)

The process of the present invention is carried out in a three-component solvent system including a good solvent, a poor solvent and water at a temperature of higher than the melting point of the copolymer with agitation. As a result, even if the starting copolymer is in particulate form, the hydration reaction product can be obtained in powdery form which can easily be separated from the solvent system and dried, and the powdery product can easily be mixed with additives such as stabilizers. It can be used for various purposes such as powder coating as it is. In addition the epoxy group content can be controlled over a wide range.

The weight ratio of the good solvent and poor solvent in the solvent system used in the present invention depends on the melt index of the copolymer and the content of the glycidyl acrylate or methacrylate, but is in the range of 1/5 to 5/1 by weight (good solvent/poor solvent).

The weight ratio of the poor solvent to water is in the range of 1/10 to 10/1 (poor solvent/water).

The three-component solvent system of a good solvent, a poor solvent and water is used in an amount of 2 to 20 parts by weight, per 1 part by weight of the starting ethylene-glycidyl acrylates or methacrylate copolymer.

The good solvent used in the present invention is an aromatic hydrocarbon (e.g. xylene, toluene, benzene), a napthalene hydride (e.g. tetralin, decalin), a halogenated hydrocarbon (e.g. carbon tetrachloride, perchloroethylene, chlorobenzene) or a phthalic acid ester (e.g. dioctyl phthalate, dimethyl phthalate), or a mixture of two or more thereof. Particularly suitable examples of the good solvent are aromatic hydrocarbons having 6 to 9 carbon atoms, such as xylene, toluene or benzene, or mixtures of two or more thereof.

The poor solvent used in the present invention is a solvent which is itself soluble in the above good solvent and in water and is a lower aliphatic or fatty alcohols having 1 to 4 carbon atoms (e.g. methanol, ethanol, isopropanol), an ethyleneglycol monoalkylether, acetone, cyclohexane or mixtures of two or more thereof. Particularly suitable examples of the poor solvent are lower alcohols having from 1 to 4 carbon atoms, such as methanol, ethanol, isopropanol, or mixtures of two or more thereof.

The hydration reaction of the present invention may be carried out in the presence of a catalyst, such as an alkali (e.g. sodium hydroxide, potassium hydroxide, ammonia, triethylamine) or an acid (e.g. sulfuric acid, phosphoric acid, hydrochloric acid, acetic acid). The mixture of the poor solvent and water is preferably regulated in the range of a pH of 11 to 3. When the pH range is outside the above range, corrosion of the reaction vessel results and the reaction product must be washed, which is disadvantageous from the industrial viewpoint.

The hydration reaction is carried out at a temperature of higher than the melting point of the copolymer, e.g. usually at 90 to 150°C, for more than one hour, usually for from 3 to 10 hours.

The starting ethylene-glycidyl acrylate or methacrylate copolymer can be produced by conventional methods, for example, by the method as disclosed in Japanese Patent Publication (unexamined) No. 23490/1972, wherein the polymerization is carried out under a pressure of 500 kg/cm² or higher, at a temperature of 40 to 200°C in the presence of a free radical-producing agent.

The content of the glycidyl acrylate or methacrylate in the copolymer depends on the copolymerization conditions and the applications of the hydration reaction product, but it is usually in the range of 5 to 40% weight, preferably 10 to 30% by weight, and the content of ethylene is 60 to 95% by weight, preferably 70 to 90% by weight. The copolymer used in the present invention includes a copolymer of ethylene and glycidyl acrylate or methacrylate with 0 to 20% by weight, of other copolymerizable monomer, such as vinyl esters having 4 to 10 carbon atoms (e.g. vinyl acetate, vinyl propionate, vinyl butyrate, vinyl benzoate) or esters of acrylic or methacrylic acid with an alcohol having 1 to 12 carbon atoms (e.g. methyl acrylate, ethyl acrylate, butyl acrylate, cyclohexyl acrylate, methyl methacrylate, ethyl methacrylate, propyl methacrylate, butyl methacrylate, cyclohexyl methacrylate). The copolymer used in the present invention has a melt index of 10 to 5,000 (measured by the method as disclosed in JIS K 6760-1971). The form of the copolymer is immaterial, but copolymers in particulate form are usually used.

After the reaction, the mixed solvent is separated from the reaction mixture by filtration and dried, and optionally distilled. The recovered solvent is used again for the hydration reaction after regulating the mixing ratio if necessary.

The hydration reaction product of ethylene-glycidyl acrylate or methacrylate copolymer obtained by the present invention contains epoxy groups and hydroxy groups and hence can be self-cured by heating. The hydration reaction product has excellent adhesion to various materials, such as metals (e.g. aluminum, iron), synthetic resins (e.g. polyolefin, nylon), papers, glass, wood or cloth, and hence the product is useful as a coating composition, for lamination or as a hot-melt type adhesive. The product is particularly industrially useful as an interlayer in the production of laminated safety glass and as a powder coating composition for various metal products, such as steel pipes.

Hitherto, a thermoplastic polyvinyl butyral resin has been used as an adhesion interlayer for laminated safety glass such as car windscreens or window glass for high buildings, because the resin satisfies the necessary criteria and no other resin having suitable properties is known.

It is well known that laminated safety glass should have excellent transparency, penetration resistance, weatherability, heat resistance and freeze resistance. Laminated safety glass having an interlayer of thermoplastic polyvinyl butyral containing plasticizers almost satisfies these requirements. However, the thermoplastic polyvinyl butyral interlayer is rubber-like at room temperature and is very sticky at its surface. Hence, the stickiness is inhibited by making the surface of the interlayer uneven and spreading powdered sodium bicarbonate thereon. This requires troublesome steps such as removal of the powder by washing with water and drying when it is used in the production of laminated glass. In addition since the resin interlayer shows increased stickiness and inferior workability at high temperatures, the laminating step is usually carried out under controlled temperature conditions (e.g. 20°C). Moreover, the resin has a large hygroscopicity and its adhesion, heat resistance and weatherability decrease when it absorbs moisture. It must therefore be handled under constant moisture conditions (e.g. at relative moisture of 20%) in order to control the water content of the resin to 0.5% or lower. Thus, the thermoplastic polyvinyl butyral resin has significant drawbacks when used as an interlayer for laminated safety glass.

As a result of the present inventor's intensive study, it has been found that the crosslinked product of the hydration reaction product of ethylene-glycidyl acrylate or methacrylate copolymer of the present invention is particularly suitable as an interlayer for laminated safety glass.

An interlayer according to the present invention has less adhesion and less hygroscopicity, and hence its workability in the production of laminated glass is significantly improved. In addition, the resin used as the interlayer is obtained in powder form, and hence, it can be used as it is for adhering with glass by conventional powder coating techniques. This simplifies and cheapens the process.

Moreover, the interlayer has self-crosslinking properties in addition to excellent adhesion and flexibility and the epoxy group and hydroxy group in the resin can readily react with each other simply by heating to form crosslinks. The strength and heat resistance of the interlayer are thus significantly improved.

Thus, laminated safety glass according to the present invention has excellent properties including excellent transparency, penetration resistance, weatherability, heat resistance and free resistance.

The ethylene-glycidyl acrylate or methacrylate copolymer used in the present invention has the components mentioned hereinbefore, and the adhesion and strength of the interlayer of the present invention are due to the glycidyl acrylate or methacrylate component. The copolymer may contain 0 to 20% by weight of other copolymerizable monomer, and this third component may improve the transparency of the product. When the content of glycidyl acrylate or methacrylate component is over 20% by weight, the resin shows unfavorably increased tackiness. The copolymer suitable for the preparation of interlayer for laminated safety glass has preferably a melt index of 10 to 500, more preferably 20 to 200. When the melt index is lower than the above range, the interlayer shows inferior precessability and, on the other hand, when the melt index is higher than the above range, the interlayer tends to show decreased strength. Preferably from 30 to 70 mole % of the epoxy groups are subjected to the hydration reaction in order to obtain the desired product. When the degree of hydration is too low, the resin shows lower strength, and on the other hand, when the degree of hydration is too high, the resin shows inferior processability due to excessive crosslinking, although the strength is high. When the hydration rate is within the above preferable range, the epoxy groups and hydroxy groups present in the molecule of the hydration reaction product react to form an appropriate crosslinking bond, which can give suitable strength and flexibility to the interlayer.

The laminated safety glass can be produced by using the crosslinked product of the hydration reaction product of the present invention as the interlayer by the conventional methods, such as the following methods. A crosslinked product means a product which swells but does not dissolve substantially in hot xylene (90°C).

(1) A crosslinked film of the hydration reaction product of ethylene-glycidyl acrylate or methacrylate copolymer.is first prepared, the film is put between glass plates and then the glass plates are laminated.

(2) The powdery hydration reaction product of ethylene-glycidyl acrylate or methacrylate copolymer is spread in the form of a layer between glass, which is heated to crosslink the hydration reaction product.

(3) A non-crosslinked film of the hydration reaction product of ethylene-glycidyl acrylate or methacrylate copolymer is put between glass plates and the product is heated to crosslink the film.

According to the above method (1), the hydration reaction product is previously formed into a crosslinked film by subjecting the hydration reaction.product to extrusion processing, calendering, or pressing at a temperature of 130 to 200°C and the crosslinked film thus prepared is laminated with glass plates. The lamination is carried out by putting the crosslinked film as an interlayer between glass plates and pressing at a temperature of 90 to 200°C, preferably 110 to 150°C, under the appropriate pressure required for causing adhesion of the interlayer and for removing air bubbles present at the interface or within the interlayer. This method for the production of laminated glass can be done by using the same apparatus as used in the production of laminated glass using thermoplastic polyvinyl butyral.

According to the above method (2), the powdery hydration reaction product is put in the form of a layer on the surface of a glass plate by a conventional powder coating technique and then another glass plate is placed on the coating layer. The resulting combination is then subjected to heat-pressing as in the above method (1). Alternatively, according to the method as disclosed in Japanese Patent Publication No 24210/1974 and 124110/1974, the powdery hydration reaction product is spread uniformly on a glass plate and another glass plate placed thereon. The resulting plates are laminated by heating under reduced pressure.

In the above method (3), the conventional extrusion lamination technique is applied, and a non-crosslinked film of the hydration reaction product is laminated with glass plates. Thereinafter, the film of the hydration reaction product is crosslinked.

The laminated safety glass thus prepared comprises at least two glass plates and the interlayer, but may be multiple laminated product. The glass plates used in the present invention may be any commercial transparent or opaque glass plates, such as normal flat glass, polished plate glass or heat absorbing plate glass, which may be subjected to surface treatment. The thickness of the glass plate and the interlayer may be decided in accordance with the kinds of applications of the final safety glass.

The laminated safety glass of the present invention may be laminated with other various inorganic or organic materials, such as metal or synthetic resins to form a multiple layer product. Besides, the interlayer may include ultraviolet absorbers, anti-oxidants, colorants, plasticizers, expanding agents, various inorganic or organic powdery or fibrous fillers and various high molecular weight compounds, in accordance with the applications of the final safety glass. Moreover, net-like or cloth-like structural materials may be laid between glass plates in order to strengthen the interlayer or for the purpose of decoration of the product.

The laminated safety glass of the present invention may be used, for example, as windshield glass for automobiles, railway cars, airplanes or ships; as window glass for buildings; as bullet-proof glass and as glass for show windows or decoration.

The hydration reaction product of ethylene-glycidyl acrylate or methacrylate copolymer of the present invention is also useful as a base resin for powder coating compositions.

Powder coating compositions have recently been widely used in fluidization dip coating, electrodeposition coating or spray coating, because this coating method have various advantages which are not achieved by liquid coating methods. For example, they can be used without toxic or dangerous solvents, with high coating efficiency, and it is possible to produce a thick layer in a single coating. Because of these advantages, much research has been carried out on powder coating compositions particularly on powdery resins suitable for powder coating. Both thermoplastic and thermosetting resins can be used as powdery resins for powder coating. Polyethylene has been widely used for lining steel pipes and drums, coating of electric wires and machines, and the protection of glasses, because of its low cost and availability in large quantity, as well as its excellent properties such as water resistance, chemical resistance and electrical insulation properties. Particularly, polyethylene is extensively used for the coating of metal surfaces and various processing methods have been developed. However, polyethylene is non-polar and hence has very poor adhesion to metals.

Various proposals have been made to improve the polyethylene coating compositions but none of them are fully satisfactory in practice. One of the proposed improvements is as disclosed in Japanese Patent Publication (unexamined) No. 79139/1976 that the polyethylene powder is coated onto a metal surface heated at a temperature far higher than the melting point of polyethylene (e.g. 280 to 350°C), by which a part of the polyethylene is decomposed to form a polar group and thereby the adhesion to metal is improved. The layer of polyethylene obtained by this method shows different adhesion depending on the different coating finishing methods or different surface states of the metals to be coated and is not necessarily satisfactory in practice. It has also also been proposed to incorporate adhesion-improving materials such as rubber or adhesion resins into polyethylene, but this method is not practically useful because it causes reduced stability in high temperature processing. It has also been proposed, as is disclosed in Japanese Patent Publication (unexamined) No. 103645/1973, that polyethylene be grafted with a polar group-containing monomer such as glycidyl methacrylate or be copolymerized with such a polar group-containing monomer in order to improve the adhesion of polyethylene. According to this method, the polymer can be caused to adhere strongly to metals, but when the coated product is contacted with an aqueous solution containing electrolytes such as sea water or saline solution, the adhesion decreases and rust results within a short period of time, which results in peeling at the metal/polymer interface or in a significant decrease of impact resistance. Accordingly such methods cannot be used for the interior coating of sea-water pipes. Because of these drawbacks, polyethylene powder coating is usually carried out by pre-coating a primer comprising a specific adhesion resin onto the metal surface and then melt-coating thereon the powdery polyethylene, as is disclosed in Japanese Patent Publication (unexamined) No. 115239/1975. This method, however, still has the drawbacks that it requires the extra steps of coating and curing of the primer, and that conventional primers such as an epoxy resins decrease the initial bond strength even when a modified polyethylene is used, even though the salt resistance of the polyethylene at the adhesion face to metals can be improved.

The powder coating composition of the present invention using the hydration reaction product of ethylene-glycidyl acrylate or methacrylate copolymer can give excellent coating film having high bond strength to metals, water resistance and resistance to saline solutions.

The powder coating composition of the present invention comprises the powdery hydration reaction product as mentioned hereinbefore and may optionally comprise from 0 to 100 parts by weight per 100 parts by weight of the said product of a powdery polyethylene and, also optionally, a filler or other additive, such as colourants, antioxidants, ultraviolet absorbers or resins.

The hydration reaction product contains epoxy groups and hydroxy groups and hence can be self-cured by heating and will adhere strongly to, for example metals, glass and polyolefins.

The optional component, powdery polyethylene can be produced by the conventional high-pressure, medium-pressure or low-pressure polymerization method and has a melt index of 0.5 to 100 and a density of 0.91 $g/cm^3$ or larger. It may be a copolymer of ethylene with less than 30% by weight of some other copolymerizable monomer such as vinyl acetate, methyl acrylate and methyl methacrylate.

From 0 to 100 parts by weight of the powdery polyethylene are used per 100 parts by weight of the said hydration product. When more than 100 parts by weight are used the coating composition shows less adhesion to metals and heat resistance. The powder coating composition of the present invention shows excellent adhesion to metals with excellent water resistance and resistance to saline solutions even if no primer is used.

The various components of the dry coating composition may be mixed by conventional mixing methods, for instance, by dry-blending the powdery components with a Henschel mixer or tumbler and then pulverizing the resulting blend by mechanical pulverization (with a pulverizer) or chemical pulverization (with solvents).

The powder coating composition of the present invention may optionally incorporate a filler or other additive, such as colorants, anti-oxidants, ultraviolet absorbers or resins (e.g. polyropylene, polybutene).

Suitable particle size of the present powder coating composition will depend on the kinds of coating method, but for electrodeposition coating, a smaller particle size is preferable, and for fluidization dip coating, a larger particle size is preferable. The powder coating composition of the present invention has usually a particle size of 32 to 100 mesh pass (which means that the powder can pass 32 to 100 mesh).

The powder coating composition of the present invention can be applied to various substances, such as metals (e.g. iron, aluminum, zinc, tin, alloys of these metals), metals or glass plated with the above metals, thermosetting resins (e.g. epoxy resin, urethane resin, epoxy-urethane resin, polyester resin), thermoplastic resins (e.g. polyethylene, polypropylene, polystyrene, nylon) in various shapes such as pipes, bars, wires or plates. The materials to be coated should have a smooth surface and are preferably subjected to pre-treatment such as blast finishing or chemical treatment.

The products coated with the powder coating composition of the present invention may optionally be coated with other compositions to form three or more coating films. For instance, the products may have the structure having 3 to 4 layers, such as the base metal, a layer of a primer and a layer of the composition of the present invention; or the base metal, a layer of the composition of the present invention and a layer of polyethylene; or the base metal, a layer of a primer, a layer of the composition of the present invention and a layer of polyethylene.

The present invention is illustrated by the following Examples but is not limited thereto.

In the Examples, various properties were measured in the following manner.

1) Melt index:

This was measured under a load of 2160 at 190°C by the method as described in JIS K 6760—1971 and is shown by the amount of flowing out per 10 minutes (g/10 min).

2) Content of glycidyl acrylate or methacrylate in the copolymer and hydration rate of epoxy group:

This was measured by back titration of epoxy group with hydroxylamine hydrochloride-sodium acetate.

3) Tensile strength and elongation of the internal layer:

In accordance with the method as described in JIS K 6760-1971, ISO #1 dumbbell was prepared from a crosslinked film (thickness: 0.76 mm) obtained by heat-pressing the hydration reaction product at 180°C and 50 kg/cm² (unless specified otherwise) for 30 minutes, and the dumbbell was pulled at a rate of 200 mm/min at 20°C and the strength and elongation at break point of the dumbbell was measured.

4) Tensile impact strength of the interlayer:

An S type dumbbell was prepared from a crosslinked film (thickness: 0.76 mm obtained by the same manner as in the above 3), and the tensile impact strength of the dumbbell was measured at 20°C in accordance with the provision of ASTM D1822-61T.

5) Refractive index of the interlayer:

A crosslinked film obtained in the same manner as described in the above 3) was dipped in dimethyl phthalate ($\eta_D^{20}$ 1.15138) and the refractive index was measured at 20°C using a white lamp as illuminant with Abbe refractometer.

6) Bond strength of the interlayer to glass:

A laminated product of glass/interlayer/Teflon sheet/glass was prepared using a crosslinked film of hydration reaction product prepared in the same manner as described in the above 3) and normal glass plates (thickness: 3 mm, width: 25 mm, length: 80 mm), previously degreased with a mixture of acetone/toluene (1/1 by volume) and dried. The laminated product was heat-pressed at 130°C for 30 minutes in a vacuum dryer, and thereafter, it was taken out and allowed to cool. The interlayer facing the glass was cut in a width of 15 mm with a knife and subjected to peeling test at a pulling rate of 100 mm/minute, at 20°C and at a pulling angle of 180°, and then the bond strength of the product was measured.

7) Light transparency and haze of laminated glass:

This was measured with standard light A in accordance with the method as described in JIS R 3205.

8) Impact resistance of laminated glass:

This was measured by allowing a steel ball (weight: 255 g, diameter: 38 mm) to fall onto the laminated glass from a height of 5 m in accordance with the method as described in JIS R 3205.

9) Heat resistance of laminated glass (Boiling test):

In accordance with the method as described in JIS R 3205, a sample of laminated glass was vertically set in at about 65°C for 3 minutes, and quickly dipped in boiling water, and after dipping therein for 2 hours, the sample was taken out, and then the state of the sample was observed.

10) Weatherability (light resistance) of laminated glass:

(i) Ultraviolet irradiation test:

A sample of laminated glass was placed about 30 cm from a mercury vapor lamp (100 V 6 A) and exposed to irradiation at 40 to 60°C for 100 hours, in accordance with the method as described in JIS R 3205, and therafter, the state of the sample was observed.

(ii) Outdoor exposure tests:

A sample was exposed outdoor for 6 months from May to October, and then the state of the sample was observed.

11) Peel strength of coating film obtained from powder coating composition:

In accordance with the method as described in JIS K 6766-1977, a coating film prepared by coating a powder coating composition onto a steel plate was cut in a width of 10 mm and it was peeled at a rate of 100 mm/minute at a pulling angle of 180°, and thereby, the peel strength was measured.

12) Resistance to saline solution of coating film:

One end of a coated steel plate was cut and dipped in 3% saline solution at 50°C for 3 days, and thereafter the length of peeling off was measured.

## Example 1

Ethylene-glycidyl methacrylate copolymer particles (content of glycidyl methacrylate: 19% by weight, melt index: 980, melting point: 84°C) (4 kg) were charged into 30 liter autoclave, and thereto were added xylene (4 kg), methanol (12 kg) and water (4 kg). After purging with nitrogen gas, the mixture was subjected to hydration reaction with agitation at 130°C for 5 hours. After cooling to room temperature, the resulting powdery hydration reaction product was separated from the reaction mixture with a centrifugal separator and then washed with methanol in an autoclave. After centrifuging again, the powdery hydration reaction product was dried at 50°C, 60 mmHg for 8 hours in a vacuum dryer.

The resulting powdery hydration reaction product (hereinafter, referrred to as "hydration product A") showed a melt index of 220, and a degree of hydration of the epoxy groups of 48% mole. This hydration product A had a tensile strength at break of 159 kg/cm$^2$, an elongation at break of 470% and a peel strength of 35 kg/25 mm, which were remarkably improved in comparison with those of the starting copolymer of 34 kg/cm$^2$, 60% and 6 kg/25 mm, respectively.

A steel plate (SSOO, thickness: 1 mm, length: 175 mm, width: 25 mm, was polished with sand paper and degreased, and heated in an electric furnace at 300°C for 5 minutes). It was then immersed for 10 seconds in a fluidized bed of the hydration product A (48 mesh pass product), taken out, and then baked at 200°C for 20 minutes in an electric furnace to give a smooth coating layer (thickness: 1 mm) having a peel strength of 6.0 kg/10 mm and a peeling length in a saline solution of less than 1 mm.

## Example 2

The hydration product A as obtained in Example 1 (48 mesh pass product, 100 parts by weight) and a powdery polyethylene (melt index: 7, density: 0.920; 48 mesh pass product, 40 parts by weight) were dry-blended with a Henschel mixer. The mixture was treated in the same manner as described in Example 1 to obtain a smooth coating layer (thickness: 0.9 mm) having a peel strength of 4.5 kg/10 mm and a peel length in a saline solution of 3.3 mm.

## Reference Example 1

In the same manner as described in Example 1 except that powdery polyethylene (melt index: 7 and density: 0.92) was used instead of the hydration product A, there was obtained a smooth coating layer (thickness: 0.7 mm) having a peel strength of 2.2 kg/10 mm. In the test of resistance to saline solution, the coating layer peeled off completely.

## Reference Example 2

In the same manner as described in Example 1 except that a freeze-pulverized sample of ethylene-glycidyl methacrylate copolymer (content of glycidyl methacrylate: 21% by weight, melt index: 53) was used instead of the hydration product A, there was obtained a smooth coating layer (thickness: 0.8 mm) having a peel strength of 3.0 kg/10 mm and a peel length in a saline solution of 10 mm.

## Example 3

Ethylene-glycidyl methacrylate copolymer particles (content of glycidyl methacrylate: 22% by weight, melt index: 180, melting point: 87°C) (4 kg) were charged into a 30 liter autoclave, and thereto were added xylene (6 kg), isopropanol (10 kg) and water (4 kg), said isopropanol and water being previously mixed and brought to pH 9 with aqueous sodium hydroxide solution. After purging with nitrogen gas, the mixture was subjected to hydration with agitation at 130°C for 3 hours. After cooling to room temperature, the resulting powdery hydration reaction product was separated from the reaction mixture with a centrifugal separator and then washed with methanol in an autoclave. After centrifuging again, the powdery hydration reaction product was dried at 50°C, 60 mmHg for 8 hours in a vacuum dryer.

The resulting powdery hydration reaction product showed a melt index of 21 and a degree of hydration of the epoxy groups of 32 mole %. This product had a tensile strength at break of 201 kg/cm$^2$, an elongation at break of 480% and a peel strength of 36 kg/25 mm which were well balanced in comparison with those of the starting copolymer of 34 kg/cm$^2$, 610% and 10 kg/25 mm, respectively.

The powdery hydration reaction product was subjected to fluidization dip test in the same manner as described in Example 1. As a result, there was obtained a smooth coating layer (thickness: 1 mm) having a peel strength of 5.2 kg/10 mm.

## Example 4

Ethylene-glycidyl methacrylate-vinyl acetate copolymer particles (content of glycidyl methacrylate: 21% by weight, content of vinyl acetate: 0.4% by weight, melt index: 53, and melting point: 90°C) (4 kg) were charged into 30 liter autoclave, and thereto were added toluene (8 kg), isopropanol (9 kg) and water (3 kg), said isopropanol and water being previously mixed and brought to pH 4.5 with aqueous sulfuric acid solution. After purging with nitrogen gas, the mixture was subjected to hydration reaction with agitation at 130°C for 3 hours. After cooling to room temperature, the powdery hydration reaction product was separated from the reaction mixture with a centrifugal separator and washed with methanol in an autoclave. After centrifuging again, the powdery hydration reaction product was dried at 50°C, 60 mmHg for 8 hours in a vacuum dryer. The resulting powdery hydration reaction product has a melt index of 2 and a degree of hydration of the epoxy groups of 24 mole %. This product had a tensile strength at break of 210 kg/cm$^2$, an elongation at break of 390% and a peel strength of 34 kg/25 mm which were well balanced in comparison with those of the starting copolymer of 85 kg/cm³, 690% and 13 kg/25 mm, respectively.

### Reference Example 3
In the same manner as described in Example 4 except that no isopropanol was added, there was obtained hydration reaction product, but the product was in the form of a slurry and hardly separated from the reaction mixture on centrifuging. It had a degree of hydration of the epoxy groups of only 6 mole %.

### Reference Example 4
In the same manner as described in Example 1 except that no xylene was added, there was obtained hydration reaction product, but this product was obtained in bulky state and was difficult to remove from the reaction mixture. It had a degree of hydration of the epoxy groups of only 11 mole %.

### Example 5
In the same manner as described in Example 1 using as the starting material ethylene-glycidyl methacrylate-vinyl acetate copolymer (content of glycidyl methacrylate: 22% by weight, content of vinyl acetate: 0.2% by weight, melt index: 180), there was obtained powdery hydration reaction product having a degree of hydration of the epoxy groups of 53 mole % (hereinafter, referred to as "hydration product B").

A steel plate (SSOO, thickness: 1 mm, length: 175 mm, width: 25 mm) was polished with sand paper and degreased and coated with an epoxy primer (SU Primer OS 3-184, made by Shinto Paint Co.) to a coating thickness of about 10 μm. It was then pre-heated in an electric furnace at 220°C for 20 minutes) immersed for 10 seconds in a fluidized bed of the hydration product B (48 mesh pass product), taken out, and then baked at 180°C for 30 minutes in an electric furnace to give a smooth coating layer (thickness: 1 mm) having a peel strength of 5 kg/10 mm and a peel length in a saline solution of 2 mm.

### Example 6
In the same manner as described in Example 5 except that a mixture of the hydration product B (48 mesh pass product, 100 parts by weight) and powdery polyethylene (melt index: 7, density: 0.920, 48 mesh pass product, 40 parts by weight) which were dry-blended with Henschel mixer was used instead of the hydration product B, there was obtained a smooth coating layer (thickness: 0.9 mm) having a peel strength of 3.5 kg/10 mm and a peel length in a saline solution of 4 mm.

### Reference Example 5
In the same manner as described in Example 5 except that powdery polyethylene (melt index: 7, density: 0.92) was used instead of the hydration product B, there was obtained a smooth coating layer (thickness: 0.6 mm), but this product did not show adhesion to a steel plate (peel strength: 0 kg/10 mm).

### Reference Example 6
In the same manner as described in Example 5 except that a freeze-pulverized sample of ethylene-glycidyl methacrylate copolymer (content of glycidyl methacrylate: 21% by weight, melt index: 53) was used instead of the hydration product B, there was obtained a smooth coating layer (thickness: 0.8 mm) having a peel strength of 2 kg/10 mm and a peel length in a saline solution of 6 mm.

### Example 7
In the same manner as described in Example 3 using ethylene-glycidyl methacrylate-vinyl acetate copolymer (content of ethylene: 72.9% by weight, content of glycidyl methacrylate: 19.1% by weight, content of vinyl acetate: 8.0% by weight, melt index: 160), there were obtained powdery hydration reaction products having a degree of hydration of the epoxy groups of 39 mole % and 56 mole % respectively.

The powdery hydration reaction products were each heat-pressed at 180°C for 30 minutes to give crosslinked film (thickness: 0.76 mm). The film was swollen but was not dissolved by hot xylene. The film was put between two normal glass plates (thickness: each 3 mm), and silicone rubber sheets were placed on both sides thereof. The product was heat-pressed at 130°C, 10 kg/cm² for 20 minutes to give a laminated glass. The properties of the crosslinked film and the laminated glass were measured in the manner as described hereinbefore. The results are shown in Table 1.

### Reference Example 7
In the same manner as described in Example 7 except that the copolymer was used without subjecting it to the hydration reaction, an interlayer and a laminated glass were prepared. The properties of the products were measured likewise. The results are shown in Table 1.

### Reference Example 8
The same copolymer as used in Example 7 was hydrated to a degree of 2 mole % of the epoxy groups and the hydration reaction product was heat-pressed at 150°C for 10 minutes to given a film (thickness: 0.76 mm). This film contained 12% by weight of hot xylene-insoluble part, which means that this product had large amount of non-crosslinked component. In the same manner as described in Example 7, a laminated glass was prepared by using the above film. The properties of the film and laminated glass were measured likewise. The results are shown in Table 1.

### Reference Example 9
In the same manner as described in Example 7 except that ethylene-glycidyl methacrylate-vinyl acetate copolymer (content of ethylene: 90.4% by weight, content of glycidyl methacrylate: 1.2% by weight, content of vinyl acetate: 8.4% by weight, melt index: 150) was used and hydrated to a degree of 57 mole %, a laminated glass was prepared. The properties of the product were measured likewise. The results are shown in Table 1.

In comparison with the products in the above Reference Examples 7 to 9, the crosslinked film obtained from the hydration reaction product in Example 7 had greater film strength, and the laminated glass obtained by using the film also had excellent properties.

### Example 8

In the same manner as described in Example 7 except that ethylene-glycidyl methacrylate copolymer (content of ethylene: 78.3% by weight, content of glycidyl methacrylate: 21.7% by weight, melt index: 120) was used and hydrated to a degree of 52 mole % of the epoxy groups, a crosslinked interlayer and a laminated glass were prepared. The properties of the products were measured likewise. The crosslinked interlayer was insoluble in hot xylene. The results are shown in Table 1.

### Reference Example 10

In the same manner as described in Example 7 except that the same copolymer as used in Example 8 was used without subjection to the hydration reaction, an interlayer and a laminated glass were prepared. The properties of the products were measured likewise. The results are shown in Table 1.

In comparison with the product of Reference Example 9, the product of Example 8 had greater properties. While the laminated glass of Example 8 was inferior to the product of Example 7 in transparency and haze, the product of Example 8 was satisfactory for other uses which do not require transparency.

### Example 9

In the same manner as described in Example 7 except that ethylene-glycidyl methacrylate-methyl acrylate copolymer (content of ethylene: 76.1% by weight, content of glycidyl methacrylate: 15.5% by weight, content of methyl acrylate: 8.4% by weight, melt index: 70) was used and hydrated to a degree of 60 mole % of the epoxy groups a crosslinked interlayer and a laminated glass were prepared. The properties of the products were measured likewise. The crosslinked interlayer was insoluble in hot xylene. The results are shown in Table 1.

### Reference Example 11

In the same manner as described in Example 7 except that the same copolymer as used in Example 9 was used without subjection to hydration reaction, an interlayer and a laminated glass were prepared. The properties of the products were measured likewise. The results are shown in Table 1.

In comparison with the product of Reference Example 11, the product of Example 9 was superior.

### Example 10

The same powdery hydrated copolymer as used in Example 7 (degree of epoxy groups hydration: 56 mole %, 100 mesh pass product) was uniformly spread onto a glass plate as used in Example 7, and and another glass plate was layed thereon. The resulting product was pre-heated at 130°C for 10 minutes in a vacuum dryer and further heated at 170°C for 30 minutes, to cause the glass plates to adhere while crosslinking the interlayer. After laminating of the glass plates, the interlayer had a thickness of 0.72 mm and was insoluble in hot xylene. The properties of the laminated glass were measured likewise. The results are shown in Table 1.

Thus, a product having similar properties to those of the product of Example 7 could be obtained using a powder coating method.

### Example 11

The powdery hydration reaction product as obtained in Example 7 (degree of epoxy group hydration 56 mole %) was melt-kneaded at 110°C with an extruder (diameter: 40 mm) equipped with T die to give a roll of film (thickness: 0.76 mm). This film showed almost no tackiness and 15% by weight was insoluble in hot xylene. This film was allowed to stand at 80°C for one week to give a film which was insoluble in hot xylene. In the same manner as described in Example 7, a laminated glass was prepared by using the above-obtained film. The properties of the product was measured likewise. The results are shown in Table 1.

### Reference Example 12

A commercially available plasticized polyvinyl butyral film (thickness: 0.76 mm) was washed with water and dried. A laminated glass was prepared by using this film in the same manner as described in Example 7. The properties of this product were measured likewise. The results are shown in Table 1.

The laminated safety glass of the present invention has excellent properties similar to or better than the conventional product obtained by using plasticized polyvinyl butyral as is explained below.

In comparison with the conventional product of plasticized polyvinyl butyral, the interlayer of the present invention shows similar or greater properties, i.e. similar or greater tensile strength, larger elongation, similar or greater tensile impact strength, far greater adhesion to glass. Besides, the product of the present invention has a refractive index close to that of glass and is also characteristic in that the film is not unduly tacky.

The laminated glass of the present invention shows similar light transparency and haze, similar deterioration of light transparency in the weatherability test, and is better in the degree to which it peels at the edge of the glass than the conventional product. It has similar impact resistance (quite satisfactory for laminated glass) and has better heat resistance. Particularly, the laminated glass of the present invention has better weatherability and heat resistance than the conventional product of plasticized polyvinyl butyral. This is due to the lower hygroscopicity of the resin.

TABLE 1

| Example No. | Base copolymer | | | | |
|---|---|---|---|---|---|
| | Ethylene (% by weight) | Glycidyl methacrylate (% by weight) | Vinyl acetate (% by weight) | Methyl acrylate (% by weight) | Melt index g/10 min) |
| Ex. 7 | 72.9 | 19.1 | 8.0 | — | 160 |
| " | " | " | " | — | " |
| Ref. Ex. 7 | " | " | " | — | " |
| " " 8 | " | " | " | — | " |
| " " 9 | 90.4 | 1.2 | 8.4 | — | 150 |
| Ex. 8 | 78.3 | 21.7 | — | — | 120 |
| Ref. Ex. 10 | " | " | — | — | " |
| Ex. 9 | 76.1 | 15.5 | — | 8.4 | 70 |
| Ref. Ex. 11 | " | " | — | " | " |
| Ex. 10 | 72.9 | 19.1 | 8.0 | — | 160 |
| " 11 | " | " | " | — | " |
| Ref. Ex. 12 | Plasticized polyvinyl butyral | | | | 0.03 |

TABLE 1 (continued)

| Example No. | Properties of the interlayer | | | | | | |
| --- | --- | --- | --- | --- | --- | --- | --- |
| | Degree of epoxy group hydration mole % | Melt index (g/10 min) | Tensile strength (kg/cm$^2$) | Elongation rate (%) | Tensile impact strength (kg.m/cm$^2$) | Bond strength to glass (kg/15 mm) | Refractive* index ($\eta_D^{20}$) |
| Ex. 7 | 39 | <0.001 | 237 | 600 | 870 | 4.5 | 1.499 |
| " | 56 | <0.001 | 261 | 560 | 1050 | 4.4 | 1.500 |
| Ref. Ex. 7 | 0 | 160 | 54 | 760 | 260 | 3.1 | 1.497 |
| " " 8 | 2 | 110 | 84 | 730 | 320 | 3.4 | 1.498 |
| " " 9 | 57 | 90 | 95 | 720 | 410 | 1.7 | — |
| Ex. 8 | 52 | <0.001 | 270 | 520 | 1100 | 4.2 | 1.504 |
| Ref. Ex. 10 | 0 | 120 | 70 | 700 | 360 | 3.1 | 1.501 |
| Ex. 9 | 60 | <0.001 | 281 | 510 | 1150 | 4.1 | — |
| Ref. Ex. 11 | 0 | 70 | 95 | 680 | 420 | 2.9 | — |
| Ex. 10 | 56 | <0.001 | 247 | 590 | 920 | 4.4 | 1.501 |
| " 11 | " | " | 249 | 570 | 960 | 4.2 | 1.499 |
| Ref. Ex. 12 | — | <0.03 | 236 | 260 | 840 | 2.5 | 1.483 |

* Refractive index of the glass used: 1.520

TABLE 1 (continued)

| Example No. | Properties of laminated glass | | | | | | | | |
| | Light trans-parency (%) | Haze (%) | Weatherability | | | | Impact resistance | Heat resistance |
| | | | UV irra-diation, decrease of per-meability (%) | Outdoor exposure | | | Impact resistance | |
| | | | | Decrease of per-meability (%) | Change of appearance (color, etc) | Impact resistance | | |
| Ex. 7 | 87.7 | 0.8 | <1.0 | <1.0 | None | Good | Good | Good |
| " | 87.9 | 0.7 | " | " | " | " | " | " |
| Ref. Ex. 7 | 83.5 | 7.5 | " | " | Peeling at circum-ference | Pene-tration | Pene-tration | Foaming from circum-ference |
| " " 8 | 84.1 | 5.3 | " | " | " | " | " | " |
| " " 9 | 83.2 | 7.8 | " | " | " | " | " | " |
| Ex. 8 | 86.1 | 3.7 | " | " | None | Good | Good | Good |
| Ref. Ex. 10 | 81.1 | 21.3 | 1.6 | 1.8 | Peeling at circum-ference | Pene-tration | Pene-tration | Foaming from circum-ference |

TABLE 1 (continued)

| Example No. | Properties of laminated glass | | | | | | | |
|---|---|---|---|---|---|---|---|---|
| | | | Weatherability | | | | | |
| | | | UV irra-diation, decrease of per-meability (%) | Outdoor exposure | | | | |
| | Light trans-parency (%) | Haze (%) | | Decrease of per-meability (%) | Change of appearance (color, etc) | Impact resistance | Impact resistance | Heat resistance |
| Ex. 9 | 87.3 | 0.8 | <1.0 | <1.0 | None | Good | Good | Good |
| Ref. Ex. 11 | 84.2 | 5.9 | " | " | Peeling at circum-ference | Pene-tration | Pene-tration | Foaming from circum-ference |
| Ex. 10 | 87.7 | 0.7 | " | " | None | Good | Good | Good |
| „ 11 | 87.6 | 0.8 | " | " | " | " | " | " |
| Ref. Ex. 12 | 87.7 | 0.7 | " | " | Peeling at circum-ference, blushing | Good | Good | Foaming from circum-ference |

0 039 749

## Claims

1. A process for the production of a powdery hydration product of an ethylene-glycidyl acrylate or methacrylate copolymer (Melt Index: 10—5,000), which comprises subjecting the copolymer to hydration so as to hydrolyse from 5 to 80 mole % of the epoxy group under agitation at a temperature higher than the melting point of the copolymer for more than one hour in the presence or absence of a catalyst, the hydrolysis being carried out in a three-component solvent system consisting of (1) a good solvent which is effective to solve the copolymer under the reaction conditions and is an aromatic hydrocarbon, a naphthalene hydride, halogenated hydrocarbon or a phthalic acid ester or a mixture of two or more thereof, (2) a poor solvent which itself is soluble in the above-mentioned good solvent and in water, but is not effective to solve the copolymer under the reaction conditions and is a lower aliphatic or fatty alcohol having 1 to 4 carbon atoms, an ethyleneglycol monoalkylether, acetone or a mixture of two or more thereof and (3) water, where the proportions of the solvent in the three-component solvent system are as follows:

good solvent/poor solvent = 1:5 to 5:1 (weight ratio)

poor solvent/water = 1:10 to 10:1 (weight ratio)

total three-component solvent/starting copolymer = 2:1 to 20:1 (weight ratio).

2. A process as claimed in claim 1, wherein the good solvent is an aromatic hydrocarbon having from 6 to 9 carbon atoms or a mixture of two or more thereof, and the poor solvent is an alcohol having from 1 to 4 carbon atoms or a mixture of two or more thereof.

3. A process as claimed in claim 1 or claim 2, wherein the ethylene-glycidyl acrylate or methacrylate copolymer is a two- or three-component copolymer containing from 60 to 95% by weight of ethylene units, from 5 to 40% by weight of glycidyl acrylate or methacrylate units and from 0 to 20% by weight of units of one or more monomers copolymerizable therewith, which monomer is a vinyl ester having from 4 to 10 carbon atoms or an ester of acrylic or methacrylic acid with an alcohol having from 1 to 12 carbon atoms.

4. Laminated glass comprising at least two glass plates and an interlayer, said interlayer comprising a crosslinked resin obtained by heating a hydrated copolymer which has been prepared by a process as claimed in any one of the preceding claims.

5. Laminated glass as claimed in claim 4 wherein the ethylene-glycidyl acrylate or methacrylate copolymer has a melt index of from 10 to 500.

6. A powder coating composition comprising a hydrated copolymer which has been prepared by a process as claimed in any one of claims 1 to 3 and optionally from 0 to 100 parts by weight of powdery polyethylene or a powdery copolymer of ethylene with less than 30% by weight of a comonomer such as vinyl acrylate, methyl acrylate or methyl methacrylate per 100 parts by weight of the said hydrated copolymer.

7. A method of forming a coated product which comprises applying a composition as claimed in claim 6, by a powder coating procedure.

## Patentansprüche

1. Ein Verfahren zur Herstellung eines pulverförmigen Hydrierungsproduktes eines Äthylen-Glycidylacrylat- oder-methacrylat-Copolymerisates (Schmelzindex: 10 bis 5000), dadurch gekennzeichnet, daß man das Copolymerisat zur Hydrolyse von 5 bis 80 Mol-% der Epoxygruppen unter Rühren bei einer höheren Temperatur als dem Schmelzpunkt des Copolymerisates für mehr als eine Stunde in Gegenwart oder Abwesenheit eines Katalysators der Hydrierung unterwirft, wobei die Hydrolyse in einem Dreikomponenten-Lösungsmittelsystem durchgeführt wird, das besteht aus (1) einem guten Lösungsmittel, das die Lösung des Copolymerisates unter den Reaktionsbedingungen bewirkt und ein aromatischer Kohlenwasserstoff, hydriertes Naphthalin, halogenierter Kohlenwasserstoff, ein Phthalsäureester oder ein Gemisch von mindestens zwei davon ist, (2) ein schlechtes Lösungsmittel, das selbst in dem vorstehend erwähnten guten Lösungsmittel und in Wasser löslich ist, jedoch nicht die Lösung des Copolymerisates unter den Reaktionsbedingungen bewirkt und ein niederer aliphatischer oder Fett-Alkohol mit 1 bis 4 Kohlenstoffatomen, ein Äthylenglykolmonoalkyläther, Aceton oder ein Gemisch von mindestens zwei davon ist, und (3) Wasser, wobei die Mengenverhältnisse der Lösungsmittel in dem Dreikomponentenlösungsmittelsystem wie folgt sind:

Gutes Lösungsmittel/schlechtes Lösungsmittel = 1:5 bis 5:1 (Gewichtsverhältnis)

schlechtes Lösungsmittel/Wasser = 1:10 bis 10:1 /Gewichtsverhältnis)

gesamtes Dreikomponentenlösungsmittel/Ausgangs-Copolymerisat = 2:1 bis 20:1 (Gewichtsverhältnis).

2. Verfahren nach Anspruch 1, wobei das gute Lösungsmittel ein aromatischer Kohlenwasserstoff mit 6 bis 9 Kohlenstoffatomen oder ein Gemisch von mindestens zwei davon, und das schlechte Lösungsmittel ein Alkohol mit 1 bis 4 Kohlenstoffatomen oder ein Gemisch von mindestens zwei davon ist.

3. Verfahren nach Anspruch 1 oder Anspruch 2, wobei das Äthylen-Glycidylacrylat- oder-methacrylat-Copolymerisat ein Zwei- oder Dreikomponenten-Copolymerisat ist, das 60 bis 95 Gew.-% Äthyleneinheiten, 5 bis 40 Gew.-% Glycidylacrylat- oder-methacrylat-Einheiten und 0 bis 20 Gew.-% Einheiten mindestens eines damit copolymerisierbaren Monomeren enthält, welches Monomere ein Vinylester mit 4 bis 10 Kohlenstoffatomen oder ein Ester von Acryl- oder Methacrylsäure mit einem Alkohol mit 1 bis 12 Kohlenstoffatomen ist.

4. Laminiertes Glas, umfassend mindestens zwei Glasplatten und eine Zwischenschicht, wobei die Zwischenschicht ein vernetztes Harz, umfaßt, das durch Erhitzen eines hydrierten Copolymerisates erhalten wurde, welches nach einem Verfahren nach einem der vorangehenden Ansprüche hergestellt wurde.

5. Laminiertes Glas nach Anspruch 4, wobei das Äthylen-Glycidylacrylat- oder-methacrylat-Copolymerisat einen Schmelzindex von 10 bis 500 hat.

6. Pulver-Beschichtungsmasse, umfassend ein hydriertes Copolymerisat, welches nach einem Verfahren nach einem der Ansprüche 1 bis 3 hergestellt wurde, und gegebenenfalls 0 bis 100 Gewichtsteile pulverförmiges Polyäthylen oder pulverförmiges Copolymerisat von Äthylen mit weniger als 30 Gew.-% eines Comonomeren, wie Vinylacrylat, Methylacrylat oder Methylmethacrylat pro 100 Gewichtsteile des genannten hydrierten Copolymerisates.

7. Verfahren zur Herstellung eines beschichteten Produktes, umfassend das Aufbringen einer Masse nach Anspruch 6 nach einem Pulver-Beschichtungsverfahren.

**Revendications**

1. Procédé pour la fabrication d'un produit d'hydratation pulvérulent d'un copolymère éthylène-acrylate ou méthacrylate de glycidyle (indice de fusion 10—5 000), caractérisé en ce qu'il consiste à soumettre le copolymère à l'hydratation de manière à hydrolyser de 5 à 80 mol % des groupes époxy en agitant à une température supérieure au point de fusion du copolymère pendant plus d'une heure en présence ou en l'absence de catalyseur, l'hydrolyse étant effectuée dans un système solvant à trois composants consistant en (1) un bon solvant qui est efficace pour dissoudre le copolymère dans les conditions de réaction et qui est un hydrocarbure aromatique, un naphtalène hydrogéné, un hydrocarbure halogéné ou un ester d'acide phtalique ou un mélange de deux ou plusieurs d'entre eux, (2) un mauvais solvant, qui est lui-même soluble dans le bon solvant mentionné ci-dessus et dans l'eau, mais qui n'est pas efficace pour dissoudre le copolymère dans les conditions de réaction, et qui est un alcool aliphatique inférieur ou gras, un éther monoalkylique d'éthylèneglycol, l'acétone ou un mélange de deux ou plusieurs d'entre eux; et (3) de l'eau, les proportions des trois composants dans le système solvant étant les suivantes:

bon solvant/mauvais solvant = 1:5 à 5:1 (en poids)

mauvais solvant/eau = 1/10 à 10:1 (en poids)

solvant total à trois composants/copolymère de départ = 2:1 à 10:1 (en poids).

2. Procédé selon la revendication 1, caractérisé en ce que le solvant est un hydrocarbure aromatique ayant de 6 à 9 atomes de carbone ou un mélange de 2 ou plusieurs de ceux-ci.

3. Procédé selon la revendication 1 ou 2, caractérisé en ce que le copolymère éthylène-acrylate ou un méthacrylate de glycidyle est un copolymère à 2 ou 3 composants contenant de 60 à 95 % en poids de motifs éthylène, de 5 à 40 % en poids de motifs acrylate ou méthacrylate de glycidyle et de 0 à 20 % en poids de motifs d'un ou plusieurs monomères copolymérisables avec celui-ci, ce monomère étant un ester de vinyle ayant de 4 à 10 atomes de carbone ou un ester d'acide acrylique ou méthacrylique d'un alcool ayant de 1 à 12 atomes de carbone.

4. Verre stratifié caractérisé en ce qu'il comprend au moins 2 plaques de verre et une couche intermédiaire, ladite couche intermédiaire comprenant une résine obtenue par chauffage d'un copolymère hydraté qui a été préparé par un procédé selon l'une quelconque des revendications précédentes.

5. Verre stratifié selon la revendication 4, caractérisé en ce que le copolymère éthylène-acrylate ou méthacrylate de glycidyle a un indice de fusion de 10 à 500.

6. Composition de revêtement en poudre, caractérisée en ce qu'elle comprend un copolymère hydraté, qui a été préparé par un procédé selon l'une quelconque des revendications 1 à 3, et facultativement de 0 à 100 parties en poids de polyéthylène pulvérulent ou d'un copolymère pulvérulent d'éthylène avec moins de 30 % en poids d'un comonomère tel qu'acrylate de vinyle, acrylate ou méthacrylate de méthyle par 100 parties en poids dudit copolymère hydraté.

7. Procédé de formation d'un produit revêtu, caractérisé en ce qu'il consiste à appliquer par une technique de revêtement en poudre une composition selon la revendication 6.